# EUROPEAN PATENT APPLICATION

(11) **EP 2 429 165 A1**
(43) Date of publication of application: **14.03.2012**
(21) Application number: 10771991.6
(22) Date of filing: 21.04.2010
(51) Int. Cl.: H04N 1/387, G06T 1/00

(54) **METHOD AND DEVICE FOR CONTROLLING WATERMARK PRINTING**

(30) Priority: 05.05.2009 CN 200910135951
(71) Applicant: Shandong New Beiyang Information Technology Co., Ltd., Hi-tech Zone Weihai Shandong 264209 (CN)
(72) Inventor: WANG, Chuntao, Weihai Shandong 264209 (CN); XU, Jiabo, Weihai Shandong 264209 (CN); DONG, Shuxun, Weihai Shandong 264209 (CN); ZHANG, Xinping, Weihai Shandong 264209 (CN); XU, Weiwei, Weihai Shandong 264209 (CN)
(74) Representative: Office Freylinger
(86) International application number: PCT/CN2010/071961
(87) International publication number: WO 2010/127588

(57) **Abstract**

A method and device for controlling watermark printing are provided. The method comprises: receiving original printing information sent from a host; processing preset original watermark data based on a watermark control instruction to obtain application watermark data; composing the application watermark data and the original printing information to obtain composed data; and printing the composed data.

## Description

### Field of the Invention

The present invention relates to the technical field of electronic and information processing, in particular, to a method and device for controlling watermark printing.

### Background of the Invention

With the development of information printing technology, a watermark printing technology has been widely used, by which various processing, such as encrypting, anti-counterfeiting, layout beautifying and adding specific identification information, can be performed on original printing information. Based on different applications, watermarks can be divided into a background watermark and an embedded watermark. The background watermark refers to a watermark which serves as the background of the original printing information, overlaps the original printing information during the printing and will not affect the visibility and completeness of the original printing information. The embedded watermark refers to a watermark which serves as the additional information of the original printing information, is inserted into the original printing information and will not overlap the original printing information during the printing. For printing information such as value bills and securities that need to be encrypted, usually the background watermark will be used for encryption; for printing some indicative information, such as indicative information of phone bill query, supermarket buying and bank queuing, or advertisement promotion, usually the embedded watermark will be used.

Currently a commonly used watermark printing method is to use dedicated software to combine printing data and watermark data as one at a host terminal and generate an image-format document which is then downloaded for printing. This method has advantages of being simple and visual, while has disadvantages that host software must be used and re-setup is desired when watermarks of different patterns are printed, which results in tedious operations.

To solve the above problems, another watermark printing method appeared, in which a desired watermark is stored in a printer memory in advance, and during printing, the corresponding watermark stored in the printer is invoked via a watermark instruction sent from a host and is then printed after being composed with original printing information. This method has a disadvantage that the amount of stored watermarks must be increased to realize various watermark patterns, which has high requirements on the capacity of the memory of the printer and thus raises the cost of the printer.

### Summary of the Invention

In view of the above problems, the present invention provides a method and device for controlling watermark printing, which can reduce the costs of the printer and can be used flexibly.

The method for controlling watermark printing provided by an embodiment of the present invention comprises the following steps:
a) receiving original printing information sent from a host;
b) processing an original watermark preset in a memory according to a watermark control instruction to obtain an application watermark;
c) composing the application watermark and the original printing information to obtain composed data; and
d) printing the composed data.

More appropriately, processing the original watermark specifically comprises one of or any combination of:
cycling processing of a watermark image, transparency processing of a watermark image, and printing density processing of a watermark image.

Preferably, the application watermark which serves as an embedded watermark or a background watermark is composed with the original printing information based on the watermark mode information.

The device for controlling watermark printing provided by an embodiment of the present invention comprises:
a first storage unit configured to store preset original watermark information;
a second storage unit configured to store original printing information sent from a host;
a watermark processing unit configured to process a preset original watermark based on a watermark control instruction to obtain an application watermark;
a composing unit configured to compose the application watermark and the original printing information to obtain composed data; and
a printing unit configured to print the composed data.

Preferably, the device further comprises:
an interface unit configured to communicate with the host and receive the original printing information sent from the host.

In view of the above description, among the technical solutions provided by the embodiments of the present invention, multiple uses of one original watermark are realized for different control manners of the same original watermark, and then variety of uses and adaptability to different uses are increased while the storage capacity of printing devices is saved, for example, in a cycling printing manner, the original watermark varies with the size of the word area; via the combined use of multiple original watermarks, the flexibility and the repetition of the use of the original watermark are increased, and more combinations can meet more personalized needs.

### Brief Description of the Drawings

The accompanying drawings herein are used to provide further understanding of the present invention and constitute a part of the present application. The illustrative embodiments of the present invention and the explanation thereof are used to explain the present invention and do not constitute improper restriction on the present invention. In the accompanying drawings:
Figure 1 is a schematic view of the processing device of the original watermark data in an embodiment of the present invention;
Figure 2 is a flowchart of processing the printing data in embodiment 1 of the present invention;
Figure 3a is a schematic view of original watermark I;
Figure 3b is a schematic view of amplified original watermark I;
Figure 4 is a schematic view of original watermark II;
Figure 5 is a schematic view of the original printing information;
Figure 6a is a schematic view of the original printing information shown in Figure 5 with the pattern of the original watermark II in Figure 4 being used as a background watermark;
Figure 6b is a schematic view of the original printing information shown in Figure 5 with the pattern of the original watermark II in Figure 4 after transparency processing being used as a background watermark;
Figure 7a is a schematic view of original watermark III;
Figure 7b is a schematic view of the original printing information shown in Figure 5 with the pattern of the original watermark III after cycling processing being used as a background watermark;
Figure 8a is a schematic view of the partially amplified original watermark I;
Figure 8b is a schematic view of the partially amplified original watermark I having a density of 50%;
Figure 9a is a schematic view of the original watermark preset in the memory;
Figure 9b is a schematic view of the data received in embodiment 2 of the present invention;
Figure 9c is a schematic view of the printing effect of the data shown in Figure 9b after being processed;
Figure 10a is a schematic view of the data received in another embodiment of the present invention; and
Figure 10b is a schematic view of the printing effect of the data shown in Figure 10a after being processed.

### Detailed Description of the Embodiments

To make the principle, the characteristics and the advantages of the present invention clearer, description will be made hereinafter referring to the accompanying drawings.

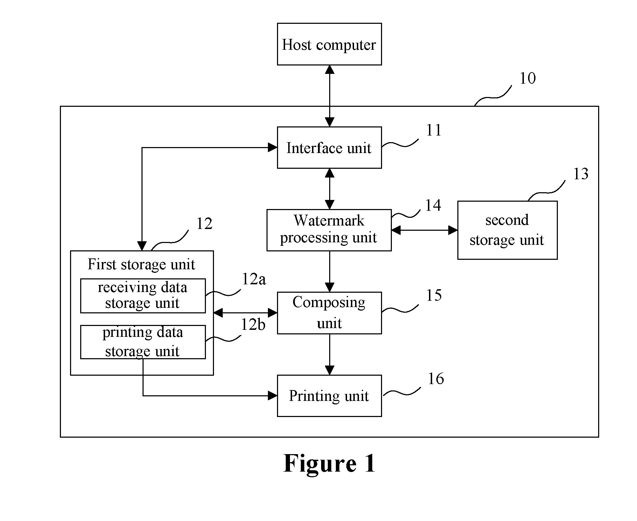

Figure 1 is a schematic view of the processing device of the original watermark data according to the present invention.

As shown in Figure 1, the watermark data processing device 10 comprises: an interface unit 11, a first storage unit 12, a second storage unit 13, a watermark processing unit 14, a composing unit 15 and a printing unit 16. The first storage unit 12 comprises a received data storage unit 12a and a composed data storage unit 12b respectively used to store received data and composed data. The second storage unit 13 is used to store original watermark data.

The interface unit 11 communicates with the host, receives original printing information and a watermark control instruction sent from the host, and stores the received data in the received data storage unit 12a. A watermark control instruction comprises four parts of contents: watermark ID, watermark processing information, watermark mode information and watermark positioning information. The watermark ID is used to identify the original watermark; the watermark processing information presents the processing manner of the original watermark, such as amplification processing, transparency processing, cycling processing and density processing and so on; the watermark mode information is used to indicate the implementation manner of watermarks, and the watermarks are divided into embedded watermarks and background watermarks, the embedded watermarks representing embedding the watermarks into the original printing information and then outputting the same; and the background watermarks representing using the watermarks as the background of the original printing information and then outputting the same.

After the data has been received, the watermark processing unit 14 searches corresponding original watermark data in the second storage unit 13 based on the watermark ID in the watermark control instruction, processes the corresponding original watermark data based on the watermark processing information in the watermark control instruction, and generates application watermark data. The watermark processing information comprises one of or any combination of the below manners:
amplification processing of a watermark image, cycling processing of a watermark image, positioning processing of a watermark image, transparency processing of a watermark image, and density processing of a watermark image, and etc.

Then the composing unit 15 composes the application watermark data and the received original printing information to obtain composed data which is stored in the composed data storage unit 12b of the data storage unit 12, and finally the printing unit 16 prints the composed data.

### Embodiment 1

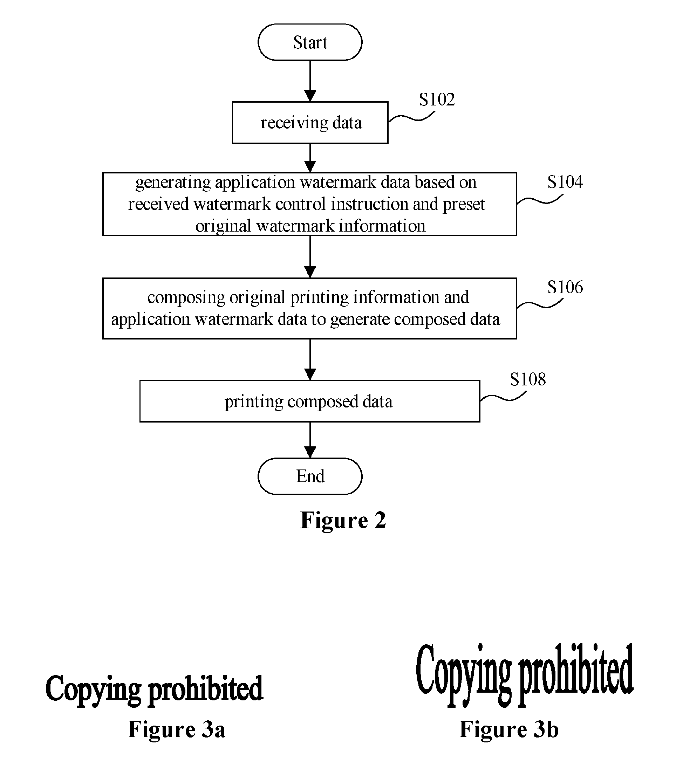

Figure 2 is a flowchart of processing the printing data by the printing device in the present invention, and the processing steps of the data will be described hereinafter referring to the accompanying drawing:
Step S102, receiving data;
receiving data sent from the host, storing the data which comprises a watermark control instruction and original printing information, the original printing information may be data in text format or data in bitmap format.
Step S104, processing preset original watermark data based on the watermark control instruction;
searching corresponding original watermark data in the second storage unit 13 based on the watermark ID in the received watermark control instruction, processing the corresponding original watermark data based on the received watermark control instruction, and generating application watermark data.

The specific processing comprises one of or any combination of the below manners:

### A. amplification processing of a watermark image;

If the watermark processing information in the instruction comprises amplification processing, the image corresponding to the original watermark data is amplified, and if the original watermark is the image shown in Figure 3a, Figure 3b shows when it is amplified by one fold longitudinally. The amplification processing may be longitudinal amplification or transverse amplification; the folds of longitudinal and transverse amplification can be set based on needs.

### B. transparency processing of a watermark image;

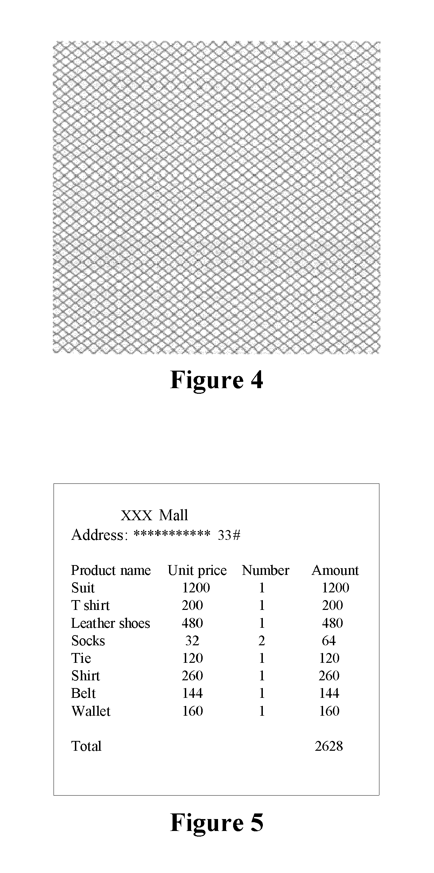

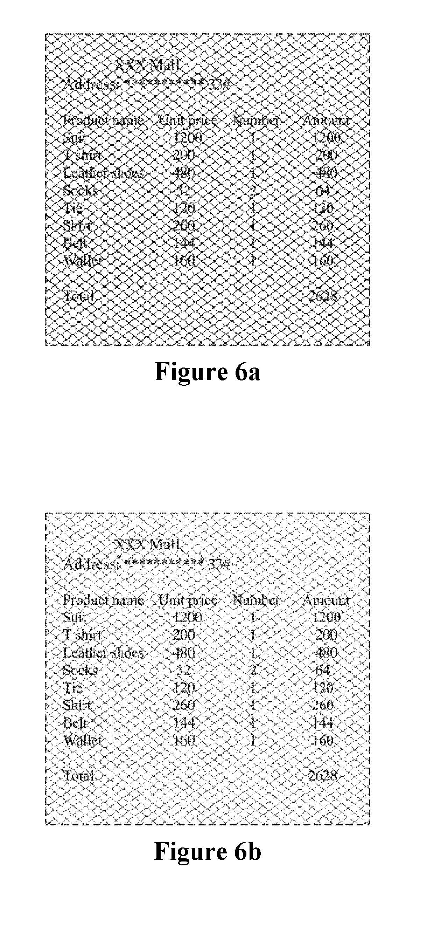

If the watermark processing information in the instruction comprises transparency processing, the image corresponding to the original watermark data is subjected to the transparency processing which changes the gray level of the image. Figure 5 shows the original printing information to be printed, and Figure 6a shows the printing effect when the original watermark II is used as the background watermark. As no transparency processing is conducted, the printed original printing information is very close to the background; thus it is not easy to distinguish them. When the original watermark image II is subjected to 50% transparency processing and then used as the background watermark for printing, the printing effect is shown in Figure 6b, in which the background information and the word information have a sharp contrast therebetween, and are easy to distinguish and is aesthetic.

### C. cycling processing of the original watermark data;

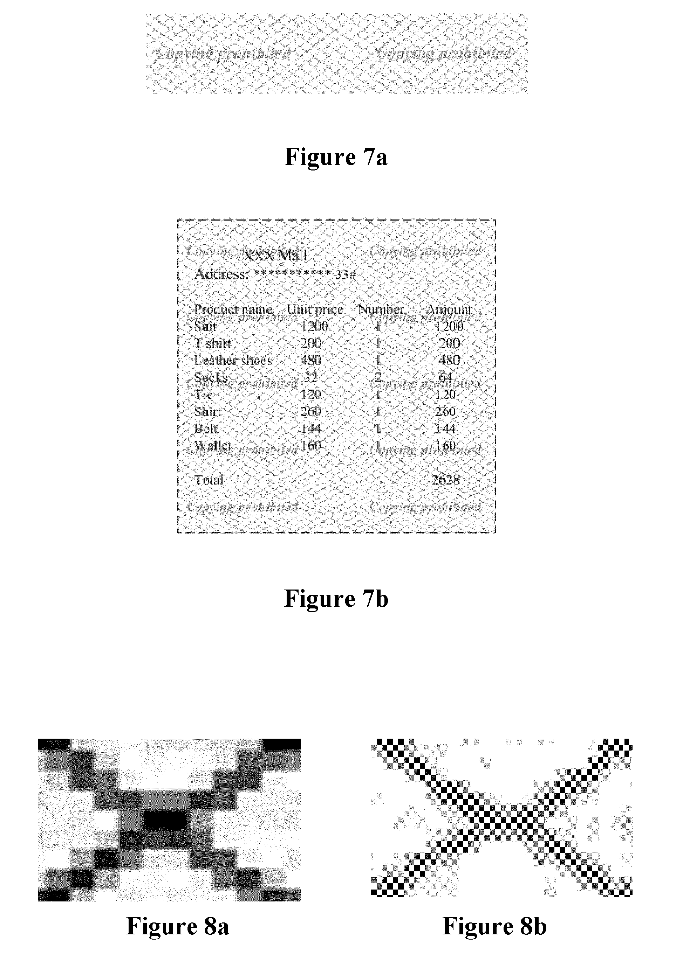

If the watermark processing information in the instruction comprises the cycling processing, the image corresponding to the original watermark data is subjected to the cycling processing. That is, the original watermark data is copied repeatedly for many times in the memory, and the height of the generated image is decided by the height of the area of the original printing information. If the original watermark is the image shown in Figure 7a, Figure 7b shows the effect of printing the original watermark, subjected to the cycling processing, then used as the background watermark and composed with the original printing information, and the height of the image after the cycling processing of the original watermark is equal to the height of the area of the original printing information on it.

### D. printing density processing of a watermark image;

If the watermark processing information in the instruction comprises density processing, the image corresponding to the original watermark data is subjected to printing density processing. Figure 8a is a schematic view of the partially amplified original watermark, and the image after the number of its effective pixels is changed to be half, that is, printing density being 50%, is shown in Figure 8b. The density processing can change the contrast, gray level and etc. of the image.

It needs to be made clear that the watermark processing information can comprise multiple processing. For example, the original watermark is subjected to both the cycling processing and the transparency processing; the processing order of the original watermark can be set based on needs on actual uses.

Step S106, composing application watermark data and the original printing information to generate the composed data. The application watermark data is composed with the original printing information one by one based on the receiving order of the data. In the case of an embedded watermark, the application watermark data corresponding to the embedded watermark is embedded into the original printing information based on the positioning information in the watermark control instruction; in the case of a background watermark, the application watermark data corresponding to the background watermark, which is used as background, is composed with the original printing information.

When the received data comprises multiple watermark control instructions, during processing the watermark control instructions, all original watermarks can be converted into corresponding application watermarks based on each watermark control instruction and then each application watermark is composed with received original printing information one by one to generate composed data; or the watermark control instructions are processed one by one, the application watermarks generated each time are composed with original printing information and then the next watermark control instruction is processed. During processing the watermark control instructions, the original printing information already received should also be processed, for example, determining the width and height of the area of the original printing information, determining the height of the area of the composed data, and etc.

### Step S108, printing the composed data;

The composed data composed of the application watermark and the original printing information is printed.

It needs to be made clear that this embodiment describes the manners of processing the original watermark data, and the process of composing the application watermark generated from processing the original watermark and the original printing information. Wherein, the processing manners of the original watermark are not limited to those in step S104, and can be added and selected based on application needs; when the original printing information is data in text format, the text data first should be converted to bitmap data, which is a common technology in the field of printing and thus is omitted here.

### Embodiment 2

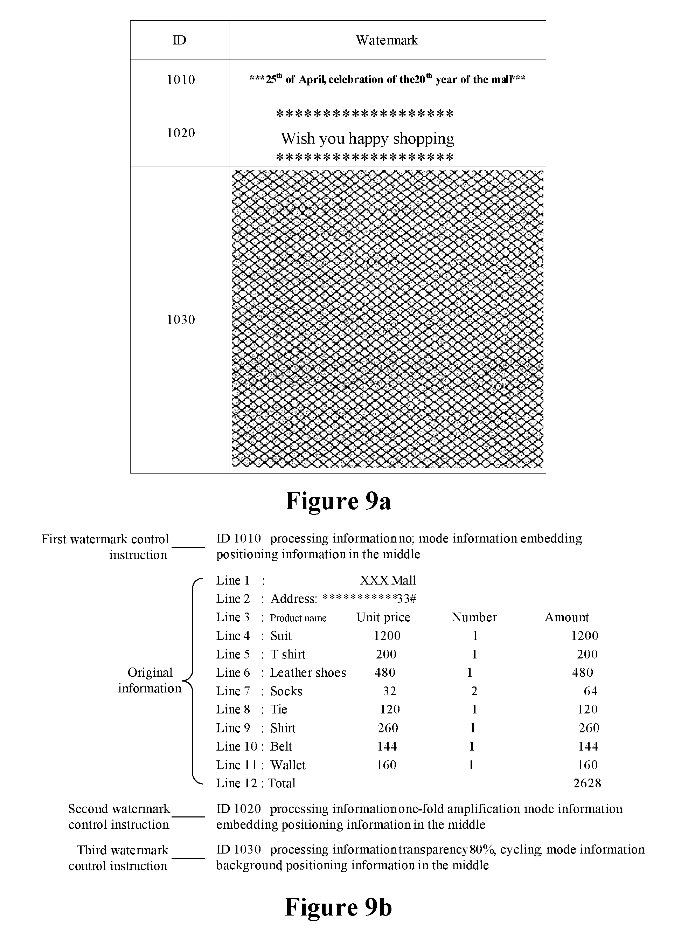

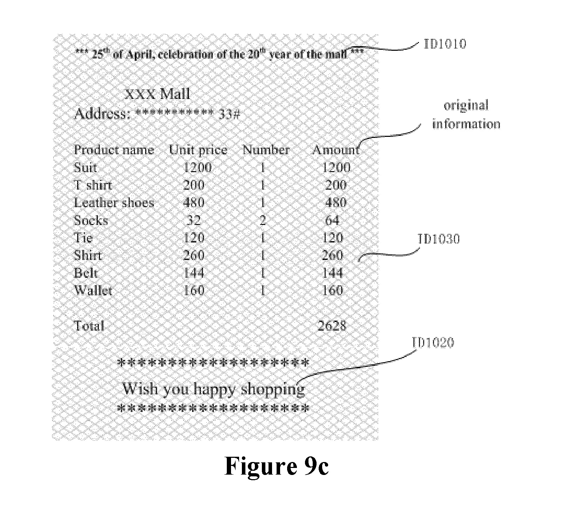

To more clearly describe the method for controlling watermark printing provided by the present invention, in conjunction with Figures 2, 9a, 9b and 9c, the processing of the printing data will be described hereinafter via exemplary data.

### Step S102, receiving data.

From Figure 9b, based on the order of receiving the data, the received data sequentially comprises the first watermark control instruction, 12-line original printing information, the second watermark control instruction, and the third watermark control instruction. Wherein, each watermark control instruction comprises a watermark ID, watermark processing information, watermark mode information and watermark positioning information.

Specifically, the original watermark data with an ID number of 1010 is invoked from the memory based on the first watermark control instruction. As the instruction information does not comprise the watermark processing information, the original watermark data is the application watermark data.

Step S104, the preset original watermark data is processed based on the watermark control instructions.

The watermark control instructions in the received data are processed. Based on the order of receiving the watermark control instructions, the original watermark data which is found from the memory is converted to application watermark data in accordance with the ID numbers and the processing information in the watermark control instructions.

Specifically, firstly, the first watermark control instruction is processed, and the original watermark data with ID number being 1010 is found in the memory based on the ID number; a first application watermark is generated based on the processing information (none) in the instruction, and the application watermark data is the same with the original watermark data; then, the second watermark control instruction is processed, and the original watermark data which ID number is 1020 is found in the memory based on the ID number; the original watermark is amplified to generate a second application watermark based on the processing information (amplification by one fold) in the instruction, and the application watermark is an amplified watermark; finally, the third watermark control instruction is processed, and the original watermark data which ID number is 1030 is found in the memory based on the ID number; based on the processing information (transparency 80%, cycling) in the instruction, 80% transparency processing is performed on the image corresponding to the original watermark data, then cycling processing is performed on the original watermark data after the transparency processing based on the size of the data area, to generate a third application watermark;

Step S106, composing the application watermark data and the original printing information and generating composed data.

Firstly, the first application watermark data is embedded in the middle of the original printing information based on the mode information (embedding) and the positioning information (in the middle) in the first watermark control instruction. As there is no original printing information before the instruction, the generated data is the first application watermark data arranged in the middle;

Secondly, the second application watermark data is embedded below the 12-line original printing information based on the mode information (embedding) and the positioning information (in the middle) in the second watermark control instruction; and

Finally, based on the mode information (background) and the positioning information (in the middle) in the third watermark control instruction, the third application watermark data generated is used as background and composed with the above composed data by, e.g. "or" operation, "addition" operation etc., to generate composed data, and the height of the image of the third application watermark is consistent with that of the area of the above composed data.

### Step S108, printing the composed data.

The composed data composed of the respective application watermarks and the original printing information is printed. The printing effect of the composed data is shown in Figure 9c.

It needs to be made clear that as this embodiment comprises multiple watermark control instructions, the above data processing is as follow: all original watermarks are converted into corresponding application watermarks based on each watermark control instruction, and then each application watermark is composed with received original printing information one by one to generate composed data.

Another processing manner will be described hereinafter, i.e., processing the watermark control instructions one by one, composing the application watermarks generated each time and the original printing information, and then processing the next watermark control instruction.

Firstly, the first watermark control instruction is processed, and the original watermark data with ID number being 1010 is found in the memory based on the ID number; a first application watermark is generated based on the processing information (none) in the instruction, and the application watermark data is the same with the original watermark data; the first application watermark data is embedded in the middle of the original printing information based on the mode information (embedding) and the positioning information (in the middle) in the instruction, as there is no original printing information before this instruction, the generated data is the first application watermark data arranged in the middle; then the 12-line original printing information as received is processed, and the generated data is placed below the first application watermark data; then the second watermark control instruction is processed, and the original watermark data with ID number being 1020 is found in the memory based on the ID number; the original watermark is amplified to generate a second application watermark based on the processing information (amplification by one fold) in the instruction, i.e., amplified watermark; the second application watermark data is embedded in the middle below the original printing information based on the mode information (embedding) and the positioning information (in the middle) in the instruction; finally, the third watermark control instruction is processed, and the original watermark data with ID number being 1030 is found in the memory based on the ID number; based on the processing information (transparency 80%, cycling) in the instruction, a 80% transparency processing is performed on the image corresponding to the original watermark data, then cycling processing is performed on the original watermark data after the transparency processing based on the size of the area of the generated data, to generate a third application watermark, and the height of the image of the application watermark is consistent with that of the above composed data; based on the mode information and the positioning information in the instruction, the third application watermark data is used as background and composed with the generated data by, e.g. " or " operation. "addition" operation etc., to generate composed data, and the printing effect of the composed data is shown in Figure 9c.

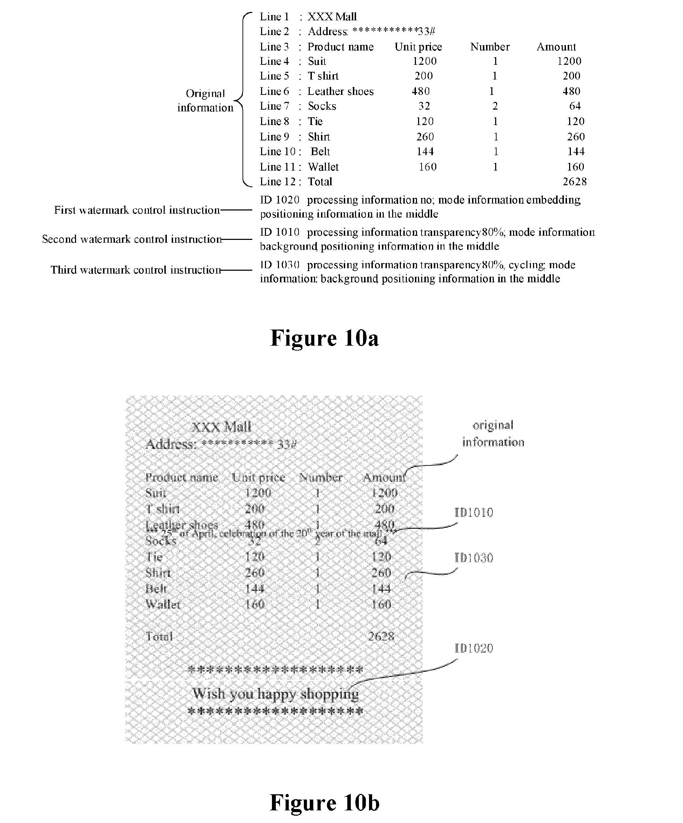

It needs to be made clear that the original watermark preset in the memory can serve as a background watermark or an embedded watermark, and its implementation manner can be determined according to the watermark mode information in the watermark control instructions. From the data information shown in Figure 10a, the data comprises 3 watermark control instructions and 12-line original printing information. Being different from the data shown in Figure 9b, in the data shown in Figure 10a, the original watermark with ID number being 1010 is used as a background watermark rather than an embedded watermark. The data processing shown in Figure 10a is the same with that shown in Figure 9a in principle, which is omitted here.

From the schematic view of the printing effect of the processed data in Figures 9c and 10b, the original watermark 1010 can serve as the embedded watermark shown in Figure 9c, which is embedded into the original printing information, and can also serve as the background of the original printing information shown in Figure 10b for processing, which enhances the flexibility and the variety of the application of the watermark.

### Embodiment 3

The processing flow in this embodiment is substantially the same with that shown in embodiment 1, and the difference lies in that the data sent from the host does not comprise the watermark control instructions which are preset in a memory shown as the second storage unit 13 in Figure 1; thus it is necessary to read the preset watermark control instructions from the memory which serve as the watermark control instructions for the next processing. Between Step S102 and Step S104, the method provided in this embodiment further comprises:
Step S103, reading the preset watermark control instructions from the memory which serve as the watermark control instructions for the next processing;
Other steps are substantially the same with those of embodiment 1 and are omitted here.

Compared with embodiment 1, in this embodiment it is not necessary to transmit the watermark control instructions at each printing, which reduces the complexity of the software of the host, and the control instructions for the original watermark do not need to be increased no matter the transmitted data to be printed is text data or image data, which simplifies the flow of the data processing and reduces unnecessary data transmission. While the disadvantage lies in that this embodiment can only conduct fixed processing based on preset watermark control instructions and cannot realize printing different watermarks at each printing.

An embodiment of the present invention provides a device for controlling watermark printing, comprising:
a first storage unit configured to store original watermark information;
a second storage unit configured to store original printing information sent from a host;
a watermark processing unit configured to process a preset original watermark based on a watermark control instruction, and obtain an application watermark;
a composing unit configured to compose the application watermark and the original printing information, and obtain composed data; and
a printing unit configured to print the composed data.

The device for controlling watermark printing further comprises:
an interface unit configured to communicate with the host and receive the original printing information sent from the host.

The watermark processing unit comprises at least one of:
an amplification processing module configured to perform amplification processing on a watermark image;
a cycling processing module configured to perform cycling processing on a watermark image;
a transparency processing module configured to perform transparency processing on a watermark image; and
a printing density processing module configured to process the printing density of a watermark image.

The device for controlling watermark printing further comprises:
a watermark control instruction memory configured to store the watermark control instructions.

In conclusion, by way of the technical solutions provided by the embodiments of the present invention, multiple applications of one original watermark are realized by sending different control instructions for the same original watermark, which increases the variety of uses and the adaptability to different usages while saves the storage capacity of the printing device, for example, the original watermark varies with the size of word area in the cycling printing manner; combined use of multiple original watermarks increases the flexibility and repetition of uses of the original watermarks, and more combinations can meet more personalized needs; when the watermark control instructions are preset in a non-volatile memory, it reduces the complexity of the software of the printing processing, and the control instructions of the original watermark do not need to be increased no matter the transmitted data to be printed is text data or image data, which simplifies the processing flow of the data and reduces unnecessary data transmission.

Described above are just preferable embodiments of the present invention and are not used to restrict the present invention. Any modifications, equivalent substitutions, improvements, and etc. within the spirit and the principle of the present invention shall all be contained within the scope of protection of the present invention.

## Claims

1. A method for controlling watermark printing, **characterized by**, comprising the following steps:
a) receiving original printing information sent from a host;
b) processing an original watermark preset in a memory based on a watermark control instruction to obtain an application watermark;
c) composing the application watermark and the original printing information to obtain composed data; and
d) printing the composed data.

2. The method according to claim 1, **characterized in that** the watermark control instruction comprises a watermark ID, and processing the original watermark in the step b) comprises:
invoking the original watermark based on the watermark ID.

3. The method according to claim 1, **characterized in that** the watermark control instruction comprises watermark processing information, and processing the original watermark in the step b) comprises:
processing the original watermark based on the watermark processing information.

4. The method according to claim 1, **characterized in that** processing the original watermark comprises one of or any combination of the following manners:
cycling processing of a watermark image, transparency processing of a watermark image, and printing density processing of a watermark image.

5. The method according to claim 1, **characterized in that** the watermark control instruction comprises watermark mode information and watermark positioning information, and the step c) comprises:
composing the application watermark and the original printing information based on the watermark mode information and the watermark positioning information.

6. The method according to claim 5, **characterized in that** the watermark mode comprises an embedded watermark mode and a background watermark mode, and the step c) comprises:
composing the application watermark which is used as an embedded watermark or a background watermark and the original printing information based on the watermark mode information.

7. The method according to any one of claims 1-3 and 5, **characterized in that**
the watermark control instruction is sent from the host; or
the watermark control instruction is preset in the memory.

8. A device configured to control watermark printing, **characterized by**, comprising:
a first storage unit configured to store preset original watermark information;
a second storage unit configured to store original printing information sent from a host;
a watermark processing unit configured to process a preset original watermark based on a watermark control instruction to obtain an application watermark;
a composing unit configured to compose the application watermark and the original printing information to obtain composed data; and
a printing unit configured to print the composed data.

9. The device according to claim 8, **characterized by**, further comprising:
an interface unit configured to communicate with the host and receive the original printing information sent from the host.

10. The device according to claim 8, **characterized in that** the watermark processing unit comprises at least one of the following modules:
an amplification processing module configured to perform amplification processing on a watermark image;
a cycling processing module configured to perform cycling processing on a watermark image;
a transparency processing module configured to perform transparency processing on a watermark image; and
a printing density processing module configured to process the printing density of a watermark image.

11. The device according to claim 8, **characterized by**, further comprising:
a watermark control instruction memory configured to store the watermark control instruction.
